# EUROPEAN PATENT SPECIFICATION

(11) **EP 4 224 287 B1**
(45) Date of publication and mention of the grant of the patent: **13.08.2025**
(21) Application number: 21888441.9
(22) Date of filing: 25.10.2021
(51) Int. Cl.: G06F 3/01, G06F 3/14, G06T 15/04, G06F 3/0346, G09F 9/30, G09G 3/00, G09G 5/373

(54) **VR DISPLAY CONTROL METHOD, ELECTRONIC DEVICE, AND COMPUTER READABLE STORAGE MEDIUM**
VR-ANZEIGESTEUERUNGSVERFAHREN, ELEKTRONISCHE VORRICHTUNG UND COMPUTERLESBARES SPEICHERMEDIUM
PROCÉDÉ DE COMMANDE D'AFFICHAGE VR, DISPOSITIF ÉLECTRONIQUE ET SUPPORT DE STOCKAGE LISIBLE PAR ORDINATEUR

(30) Priority: 09.11.2020 CN 202011241671
(43) Date of publication of application: 09.08.2023
(73) Proprietor: Huawei Technologies Co., Ltd., Shenzhen, Guangdong 518129 (CN)
(72) Inventor: LV, Fenglin, Shenzhen, Guangdong 518129 (CN); XU, Qiling, Shenzhen, Guangdong 518129 (CN); XIA, Pei, Shenzhen, Guangdong 518129 (CN); LI, Longhua, Shenzhen, Guangdong 518129 (CN); HUANG, Bingjie, Shenzhen, Guangdong 518129 (CN)
(74) Representative: Maiwald GmbH
(86) International application number: PCT/CN2021/126177
(87) International publication number: WO 2022/095744

(56) References cited:
- WO-A1-2019/143189
- CN-A- 105 704 475
- CN-A- 106 201 392
- CN-A- 106 600 676
- CN-A- 106 604 003
- CN-A- 106 980 364
- CN-A- 108 280 868
- US-A1- 2009 231 331
- US-A1- 2016 313 800
- US-A1- 2018 033 204
- US-A1- 2019 079 599
- US-A1- 2020 241 731

## Description

### CROSS-REFERENCE TO RELATED APPLICATIONS

This application claims priority to Chinese Patent Application No. 202011241671.9, filed with the China National Intellectual Property Administration on November 9, 2020 and entitled "VR DISPLAY CONTROL METHOD, ELECTRONIC DEVICE, AND COMPUTER-READABLE STORAGE MEDIUM".

### TECHNICAL FIELD

Embodiments of this application relate to the field of terminal technologies, and in particular, to a VR display control method, an electronic device, and a computer-readable storage medium.

### BACKGROUND

An electronic device may establish a connection to virtual reality (Virtual Reality, VR) glasses through a data cable, and an interface displayed in the electronic device may be projected onto a display of the virtual reality glasses in real time. A user may operate a controller connected to the virtual reality glasses, to operate a control in a virtual picture in the display of the glasses. In other words, the user completes an operation on a mobile phone in the virtual reality glasses. However, because an interface displayed in the electronic device is displayed in a rectangular form in a VR scene, visual experience of the user is reduced when the user watches content at an edge of a screen.
Document US 2019/079599 A1 discloses a method for controlling a pointer in virtual reality and an electronic device. Document US 2018/033204 A1 discloses a system and method for displaying computer-based content in a virtual or augmented environment. Document WO 2019/143189 A1 discloses an electronic device and a method of operating an electronic device in virtual reality.
Document US 2020/241731 A1 discloses a virtual reality VR interface generation method and apparatus. Document US 2016/313800 A1 discloses an information processing device, an information processing method, and a program.

### SUMMARY

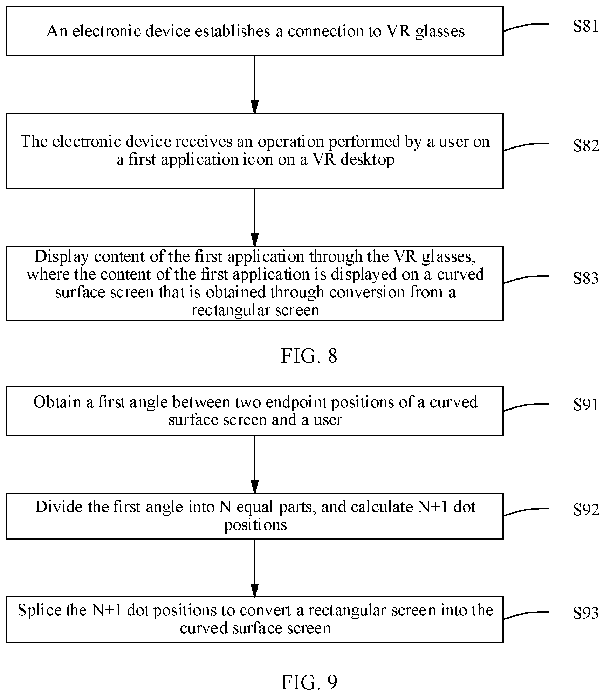

The present invention is defined by the appended claims. Embodiments of this application provide a VR display control method, an electronic device, and a computer-readable storage medium. In embodiments of this application, a most eye-friendly curvature effect is achieved through a VR virtual scene, so that visual experience of a user can be enhanced, and user experience can be improved. The scope of the claims is best understood in light of the embodiments described in the context of Figures 8-13. Other embodiments mentioned in the description may not comprise the complete combination of features as claimed, but are useful in understanding the invention.

According to a first aspect, embodiments of this application provide a VR display control method that is applied to an electronic device connected to a virtual reality display device, where the method includes: generating a VR desktop, where the VR desktop is displayed on the virtual reality display device; receiving an operation performed by a user on a first application icon on the VR desktop, where the first application icon is associated with a first application installed on the electronic device; and in response to the operation, displaying content of the first application through the virtual reality display device, where the content of the first application is displayed on a curved surface screen that is obtained through conversion from a rectangular screen.

According to embodiments of this application, when the virtual reality display device is connected to the electronic device, the VR desktop may be generated, and then the operation performed by the user on the first application icon on the VR desktop is received, so that the content of the first application may be displayed through the virtual reality display device, and the content of the first application may be displayed on the curved surface screen that is obtained through conversion from the rectangular screen. Therefore, in embodiments of this application, a most eye-friendly curvature effect is implemented through a VR virtual scene, so that visual experience of the user can be enhanced, and user experience can be improved.

With reference to the first aspect, in a possible design, before the VR desktop is displayed on the virtual reality display device, a connection to the virtual reality display device is further established, and the electronic device enters a VR mode.

Based on the design, after the electronic device establishes a connection to VR glasses, the electronic device enters the VR mode.

With reference to the first aspect, in a possible design, after the electronic device enters the VR mode, the electronic device enters a screen-off state.

Based on the design, because the user performs watching through the VR glasses, the electronic device may turn off a screen, to help save power and prevent a misoperation.

With reference to the first aspect, in a possible design, a connection to a controller is established through a wireless network, and the operation performed by the user on the first application icon through the controller is received.

Based on the design, the user may perform the operation by using the controller. This improves convenience for the operation.

With reference to the first aspect, in a possible design, four vertex positions of the curved surface screen are calculated based on four vertex positions of the rectangular screen, two endpoint positions of the curved surface screen are determined based on the four vertex positions of the curved surface screen, and a first angle between the two endpoint positions of the curved surface screen and the user is determined.

With reference to the first aspect, in a possible design, the first angle is divided into N equal parts, where N is an integer greater than or equal to 2, and N+1 dot positions on the curved surface screen are calculated.

Based on the design, a plurality of positions on the curved surface screen may be calculated based on a small angle of each screen.

With reference to the first aspect, in a possible design, the N+1 dot positions on the curved surface screen are spliced.

Based on the design, a plurality of rectangles may be spliced at a plurality of dot positions. In this way, the rectangular screen may be converted into the curved surface screen.

With reference to the first aspect, in a possible design, a two-dimensional coordinate ratio, on a first curved surface, of an intersection point between a ray of the controller and the curved surface screen is obtained, where the two-dimensional coordinate ratio is used as a touch position at which the controller operates the electronic device.

According to a second aspect, embodiments of this application further provide an electronic device, where the electronic device includes:
a memory, configured to store a computer program; and
a processor, configured to execute the computer program stored in the memory, where when the computer program is executed, the processor is configured to perform the VR display control method.

According to embodiments of this application, when a virtual reality display device is connected to the electronic device, an operation performed by a user on a first application icon on a VR desktop is received, so that a display screen may be projected onto the virtual reality display device, and the display screen may be further converted from a rectangular screen into a curved surface screen. Therefore, in embodiments of this application, a most eye-friendly curvature effect is achieved through a VR virtual scene, so that visual experience of the user can be enhanced, and user experience can be improved.

According to a third aspect, embodiments of this application further provide a computer-readable storage medium, where the computer-readable storage medium includes computer instructions; and when the computer instructions are run on an electronic device, the electronic device is enabled to perform the VR display control method.

According to embodiments of this application, a VR desktop is generated after a virtual reality display device is connected, and an operation performed by a user on a first application icon on the VR desktop is received, so that content of a first application may be displayed through the virtual reality display device, and the content of the first application may be displayed on a curved surface screen that is obtained through conversion from a rectangular screen. Therefore, in embodiments of this application, a most eye-friendly curvature effect is achieved through a VR virtual scene, so that visual experience of the user can be enhanced, and user experience can be improved.

### BRIEF DESCRIPTION OF DRAWINGS

FIG. 1 is a schematic diagram of a connection between an electronic device and VR glasses according to an embodiment of this application;
FIG. 2 is a schematic diagram of a structure of a controller according to an embodiment of this application;
FIG. 3 is a schematic diagram of projecting a display screen of an electronic device onto VR glasses according to an embodiment of this application;
FIG. 4 is a schematic diagram of a structure of an electronic device to which a VR display control method is applicable according to an embodiment of this application;
FIG. 5 is a schematic diagram of a structure of an operating system according to an embodiment of this application;
FIG. 6 is a top view of a rectangular screen according to an embodiment of this application;
FIG. 7 is a schematic diagram of watching a rectangular screen by a user according to an embodiment of this application;
FIG. 8 is a schematic diagram of a VR display control method according to an embodiment of this application;
FIG. 9 is a schematic diagram of another VR display control method according to an embodiment of this application;
FIG. 10 is a schematic diagram of a curved surface screen according to an embodiment of this application;
FIG. 11 is a schematic diagram of another curved surface screen according to an embodiment of this application;
FIG. 12 is a schematic diagram of watching a curved surface screen by a user according to an embodiment of this application; and
FIG. 13 is a schematic diagram of a controller operation according to an embodiment of this application.

**List of reference numerals:**

| | |
|---|---|
| Electronic device | 100 |
| Processor | 110 |
| External memory interface | 120 |
| Internal memory | 121 |
| USB interface | 130 |
| Charging management module | 140 |
| Power management module | 141 |
| Battery | 142 |
| Antenna | 1, 2 |
| Mobile communication module | 150 |
| Wireless communication module | 160 |
| Audio module | 170 |
| Speaker | 170A |
| Receiver | 170B |
| Microphone | 170C |
| Headset jack | 170D |
| Sensor module | 180 |
| Pressure sensor | 180A |
| Gyroscope sensor | 180B |
| Barometric pressure sensor | 180C |
| Magnetic sensor | 180D |
| Acceleration sensor | 180E |
| Distance sensor | 180F |
| Optical proximity sensor | 180G |
| Fingerprint sensor | 180H |
| Temperature sensor | 180J |
| Touch sensor | 180K |
| Ambient light sensor | 180L |
| Bone conduction sensor | 180M |
| Button | 190 |
| Motor | 191 |
| Indicator | 192 |
| Camera | 193 |
| Display panel | 194 |
| SIM card interface | 195 |
| VR glasses | 200 |
| Controller | 300 |

The following specific implementations further describe this application in detail with reference to the foregoing accompanying drawings.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The term "and/or" in this application describes an association relationship for describing associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In embodiments of this application, words such as "first" and "second" are merely used to distinguish between different objects, but cannot be understood as indicating or implying relative importance, and cannot be understood as indicating or implying a sequence. For example, a first application, a second application, and the like are used to distinguish different applications, but are not used to describe a specific order of applications. A feature limited by "first" or "second" may explicitly or implicitly include one or more of the features.

In the descriptions of embodiments of this application, the word such as "example" or "for example" is used to represent giving an example, an illustration, or a description.

Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

The following first explains some nouns or terms in embodiments of this application.

Virtual reality (virtual reality, VR) is a high and new technology emerging in recent years. The virtual reality technology is a computer simulation system that can be used to create and experience a virtual world. In the virtual reality technology, a computer is used to simulate a virtual environment in three-dimensional (which is also referred to as 3D) space. The virtual reality technology is a system simulation technology in which multi-source information is fused, and a three-dimensional dynamic scenario is in interaction with a physical behavior, so that a user can be immersed in a VR scene. In short, VR is a virtual reality technology in which a visual environment is rendered so that a user is immersed in a VR scene to the greatest extent and enjoys immersive experience.

A head-mounted virtual reality device (Head Mount Display) in a virtual reality display device is a type of wearable devices, and is also referred to as a virtual reality helmet, VR glasses, or a glasses-type display.

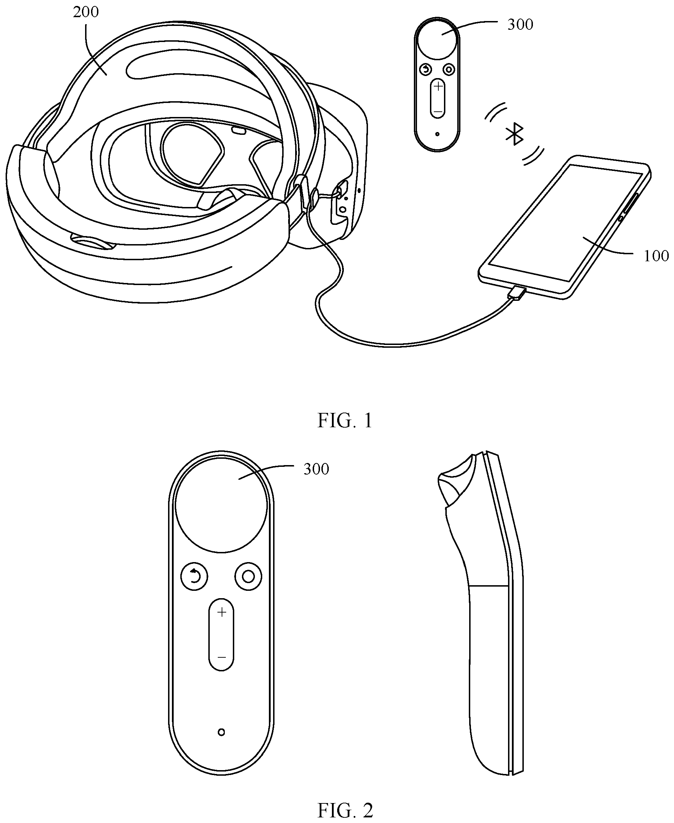

The VR display control method provided in embodiments of this application may be applied to a scenario, shown in FIG. 1, in which an electronic device 100 and VR glasses 200 are interconnected based on a connection line.

In the scenario shown in FIG. 1, the electronic device 100 may project content of a display screen of the electronic device 100 onto the VR glasses 200, and a user watches a photo or a video, or plays a game through the VR glasses, so that the user may enjoy experience of a larger screen.

In addition, as shown in FIG. 1, the electronic device 100 may be connected to a controller 300 in a manner of Bluetooth. After the user connects the electronic device 100 to the VR glasses 200 through a data cable, the user wears the VR glasses 200. Therefore, the user may operate the controller 300 to operate a control in a virtual picture on a display of the glasses.

Refer to FIG. 2. The controller 300 includes hardware structures such as a touchpad, a return button, a volume button, a HOME (main menu) button, an indicator, and a trigger button. Specific functions of each component are shown in Table 1.

**Table 1**

| Component | Function |
|---|---|
| Touchpad | Slide up and down/left and right |
| | Tap: confirm |
| HOME button | Single-press: go back to HOME directly |
| | Press and hold for 3 seconds: a picture and a controller are directed toward the front |
| Back button | Single-press: go back to a previous level |
| Volume button | Single-press: adjust volume |
| Trigger button | Single-press: perform customization in an application |
| Battery compartment | For installing a battery and supplying power to a controller |
| Indicator | Steady on: connection succeeds |
| | Off: powered off or dormant |
| | Blinking: pairing |
| | On/off breathing: low battery |

It may be learned from Table 1 that, when the user presses and holds the touchpad and moves the controller, a sliding operation may be performed; when the user taps on the touchpad on the controller, a pressing operation may be performed; and when the user presses the HOME button, a standby interface of a mobile phone may be returned to.

For example, when the user taps on a video application, the electronic device 100 runs the video application, and the VR glasses 200 may display a display interface of the video application in a virtual environment in three-dimensional space. In embodiments of this application, a most eye-friendly curvature effect is achieved through a VR virtual scene, so that visual experience of the user can be enhanced, and user experience can be improved.

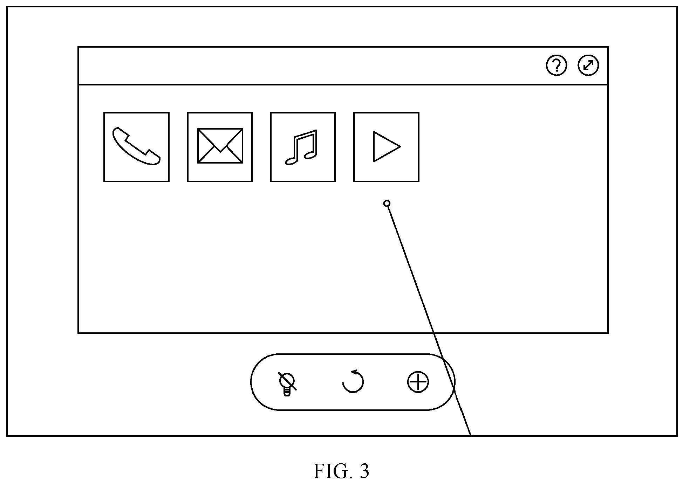

Refer to FIG. 3. In a possible embodiment, after the user establishes a connection between the electronic device 100 and the VR glasses 200, the electronic device 100 enters a VR mode. A display screen of the electronic device 100 may be projected onto the VR glasses 200. In a scenario shown in FIG. 3, a rectangular screen of the electronic device 100 is projected onto the VR glasses 200. Therefore, the user may emit a ray to the rectangular screen through the controller 300, to control the rectangular screen through the ray emitted by the controller 300.

It may be understood that in some possible implementations, the electronic device 100 and the VR glasses 200 may alternatively be connected based on a communication network instead of the connection line. The communication network may be a local area network, or may be a wide area network interconnected via a relay (relay) device. When the communication network is the local area network, for example, the communication network may be a near field communication network such as a Wi-Fi hotspot network, a Bluetooth network, or a near field communication (near field communication, NFC) network. When the communication network is the wide area network, for example, the communication network may be a 3rd-generation wireless telephone technology (3rd-generation wireless telephone technology, 3G) network, a 4th-generation mobile communication technology (4th-generation mobile communication technology, 4G) network, a 5th-generation mobile communication technology (5th-generation mobile communication technology, 5G) network, a future evolved public land mobile network (public land mobile network, PLMN), the Internet, or the like.

In some embodiments of this application, the electronic device 100 shown in FIG. 1 may be a portable electronic device that further includes another function such as a personal digital assistant and/or a music player function, such as a mobile phone or a tablet computer. An example embodiment of a portable electronic device includes but is not limited to a portable electronic device that carries or has another operating system. The portable electronic device may alternatively be another portable electronic device, for example, a laptop (laptop) with a touch-sensitive surface (for example, a touch panel). It should be further understood that in some other embodiments of this application, the electronic device 100 may not be the portable electronic device, but a desktop computer having a touch-sensitive surface (for example, a touch panel).

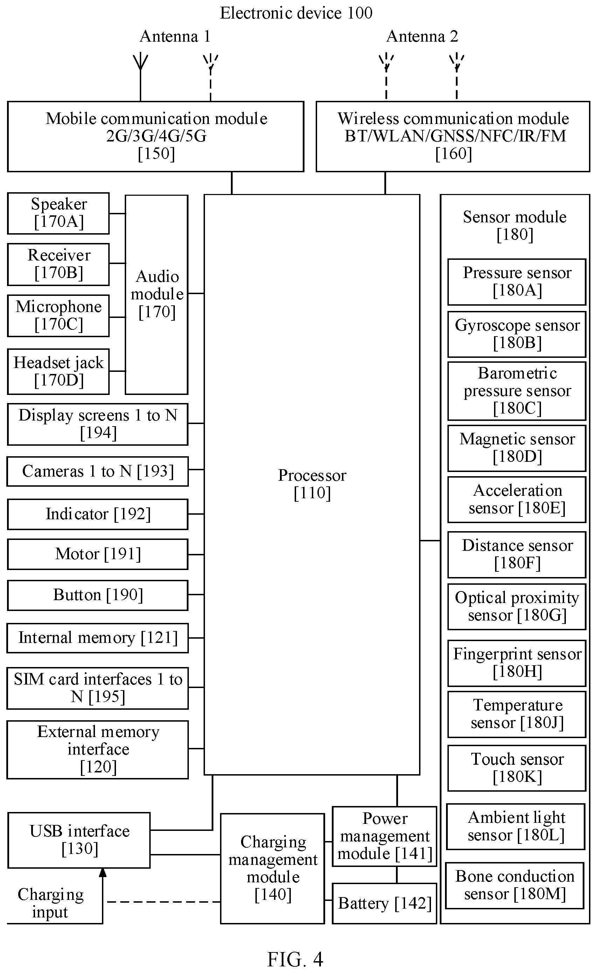

FIG. 4 is a schematic diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), augmented reality (augmented reality, AR) device, virtual reality (virtual reality, VR) device, artificial intelligence (artificial intelligence, AI) device, wearable device, in-vehicle device, smart home device, and/or smart city device, a specific type of the electronic device is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural processing unit (neural processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules illustrated in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG) 1, MPEG2, MPEG3, and MPEG4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store code of an operating system, an application (for example, a camera application), or the like. The data storage area may store data (for example, an image or a video collected by the camera application) created during use of the electronic device 100, or the like.

The internal memory 121 may further store code of the VR display control method provided in embodiments of this application. When the code of the VR display control method stored in the internal memory 121 is executed by the processor 110, a display interface of an application may be displayed in a virtual environment in three-dimensional space. A most comfortable curvature effect of human eyes is implemented a VR virtual scenario, so that visual experience of the user can be enhanced, and user experience can be improved.

In addition, the internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory. (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

Based on division of an operating principle, the flash memory may include NOR FLASH, NAND FLASH, 3D NAND FLASH, or the like. Based on division of a potential order of storage cells, the flash memory may include a single-level cell (single-level cell, SLC), a multi-level cell (multi-level cell, MLC), a triple-level cell (triple-level cell, TLC), a quad-level cell (quad-level cell, QLC), or the like. Based on division of a storage specification, the flash memory may include universal flash storage (universal flash storage, UFS), an embedded multi media card (embedded multi media Card, eMMC), or the like.

The random access memory may be directly read and written by the processor 110, may be configured to store executable programs (such as machine instructions) of an operating system or other running programs, and may further be configured to store data of the user and data of applications.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100. A software system of the electronic device 100 may use a layered architecture, an event-driven architecture, a microkernel architecture, a micro service architecture, or a cloud architecture. In embodiments of the present invention, an Android system of a layered architecture is used as an example to illustrate the software structure of the electronic device 100.

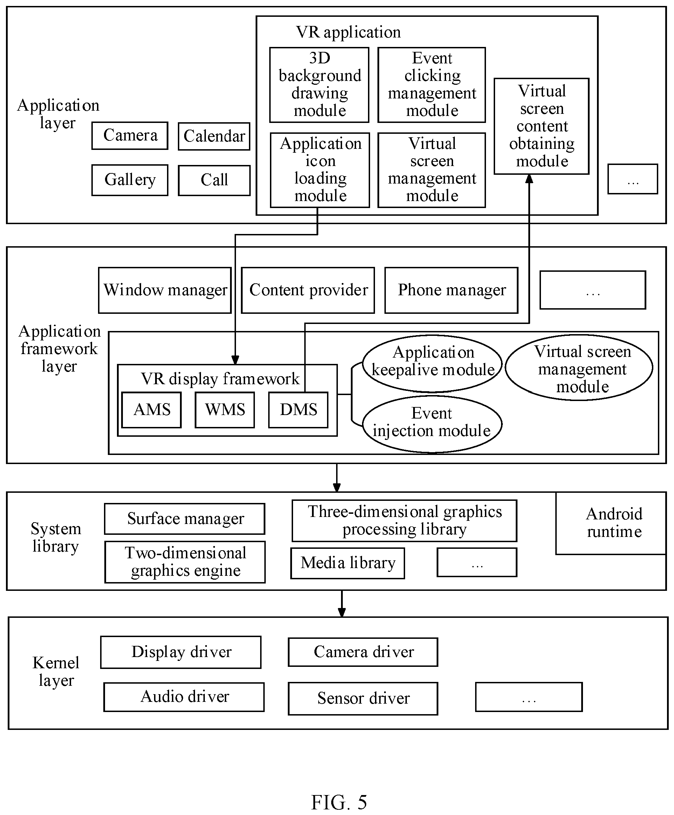

FIG. 5 is a block diagram of a software structure of an electronic device 100 according to an embodiment of the present invention.

In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

The application layer may include a series of application packages.

As shown in FIG. 5, the application package may include applications such as Camera, Gallery, Calendar, Call, Map, Navigation, WLAN, Bluetooth, Music, Video, Messages, and a VR glasses application. The VR glasses application includes a 3D background drawing module, a controller event management module, an application icon loading module, a virtual screen management module, and a virtual screen content obtaining module.

The 3D background drawing module is configured to complete drawing of a background picture displayed in a 3D virtual environment, so that a user can feel like being in a real scene.

The controller event management module is configured to process an event from a controller, so that the user can touch and control a control in a virtual display interface by operating the controller.

The application icon loading module is configured to load and display icons of several applications on the electronic device in a virtual environment of the VR glasses.

The virtual screen management module is configured to: create a virtual screen when the user taps on an application icon to start an application, and destroy the virtual screen when the user closes the application.

The virtual screen content obtaining module is configured to: when the user taps on a started application, obtain content in the application, and render the content in the application through distortion, to display the content in the virtual environment.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification-type message. The notification manager may automatically disappear after a short pause without requiring a user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an announcement is given, the electronic device vibrates, or the indicator light blinks.

In embodiments of this application, the application framework layer includes an activity manager service (Activity Manager Service, AMS), a window manager service (Window Manager Service, WMS), and a display manager service (Display Manager Service, DMS). The application framework layer may further include an application keep-alive module, an event injection module, and a virtual screen management module. In embodiments of this application, the DMS transmits display content of the electronic device 100 to the VR glasses application, and the VR glasses application performs curved surface screen processing. Finally, processed display data is returned to a VR display framework, and the AMS/WMS further performs display processing.

The application keep-alive module is configured to control the electronic device to enter a VR display mode after the application is started. In this mode, the electronic device may run a plurality of applications at the same time, and support the applications to be in an active state at the same time.

The event injection module is configured to obtain, in a display mode, an event corresponding to an operation of the user, and transfer the event to a virtual screen.

The virtual screen management module is configured to provide the electronic device with a capability of creating a virtual screen and destroying a virtual screen.

The Android runtime includes a kernel library and a virtual machine. The Android runtime is responsible for scheduling and management of the Android system.

The kernel library includes two parts: a utility function that needs to be called in a Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation as an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch and single-press operation and a control corresponding to the single-press operation is a control of a camera application icon is used. The camera application invokes an interface of the application framework layer to enable the camera application, then enables the camera driver by invoking the kernel layer, and captures a static image or a video through the camera 193.

Based on the foregoing hardware structure of the electronic device, embodiments of the VR display control method in this application are provided.

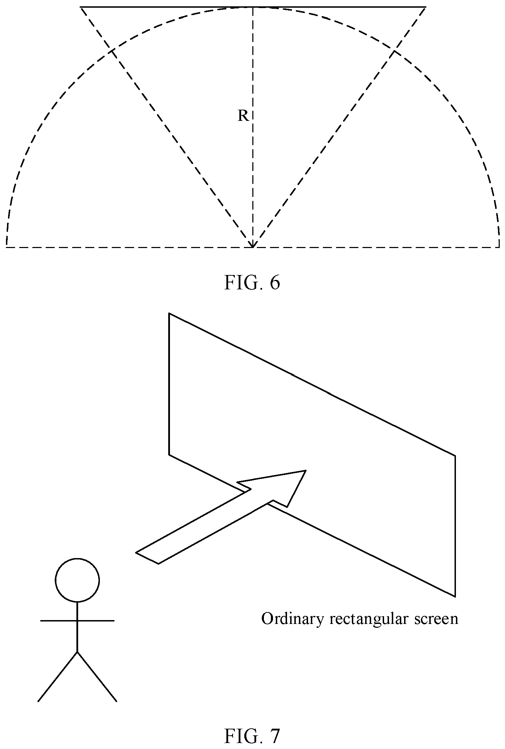

In some possible implementations, as shown in FIG. 6 and FIG. 7, an interface displayed in the electronic device is displayed in a VR scene by using a rectangular screen. It may be understood that, in an embodiment, the rectangular screen may be a planar rectangle. Therefore, when the user watches content at an edge of the rectangular screen, because the rectangular screen is the planar rectangle, when the user watches the edge of the screen, an angle is formed between a line of sight of the user and the planar rectangle. Therefore, a visual effect of the user is reduced, and user experience is poor. Therefore, embodiments of this application provide a VR display control method. The method may be performed by an electronic device connected to a virtual reality display device, and a display algorithm corresponding to the method may be integrated into an application that supports VR.

Refer to FIG. 8. With reference to the accompanying drawings and an actual application scenario, the following describes a VR display control method provided in embodiments of this application by using an example. Specific steps are as follows.

Step S81. An electronic device establishes a connection to VR glasses.

Before using the VR glasses, a user may connect a mobile phone to VR glasses 200 through a data cable. The electronic device 100 is described by using the mobile phone as an example. After the mobile phone establishes a connection to the VR glasses 200, the mobile phone automatically enters a VR mode. In this case, a screen of the mobile phone may be in a screen-off state. Therefore, this may help save power and prevent a misoperation. Then the user wears the VR glasses 200. In this case, the user may see a VR desktop in the VR glasses 200. In addition, the user may adjust a wearing position of the VR glasses 200 to make a picture clearer.

Step S82. The electronic device receives an operation performed by the user on a first application icon on the VR desktop.

After establishing the connection to the VR glasses 200, the electronic device 100 generates the VR desktop, so that the VR desktop may be displayed on the VR glasses 200.

In at least one embodiment of this application, the electronic device 100 may receive the operation performed by the user on the first application icon on the VR desktop. Specifically, the first application icon may be associated with a first application installed on the electronic device. For example, the first application uses VR mobile phone projection as an example, and the VR mobile phone projection may be associated with an icon (for example, a VR mobile phone projection icon) on the VR desktop. Therefore, after the electronic device 100 receives an operation performed by the user on the VR mobile phone projection icon, an application (that is, the VR mobile phone projection) corresponding to the VR mobile phone projection icon is started.

It may be understood that the electronic device 100 may establish a connection to a controller 300. In some possible implementations, the electronic device 100 may establish the connection to the controller through a wireless network. For example, the electronic device 100 may establish the connection to the controller 300 through Bluetooth.

The user operates the controller 300 to operate an application on the VR desktop. For example, the first application is the VR mobile phone projection. When the user taps on the VR mobile phone projection icon through the controller 300, the electronic device 100 may display content of the application through the VR glasses 200 in response to the operation. In other words, a display screen of the electronic device 100 is projected onto the VR glasses 200. In this case, the user may see the display screen of the electronic device 100 in the VR glasses 200.

Step S83. Project the display screen of the electronic device into the VR glasses, where the electronic device converts the display screen from a rectangular screen to a curved surface screen.

In a possible implementation, when the electronic device 100 detects that the user acts on the VR mobile phone projection icon, the electronic device 100 displays, through the VR glasses 200, content from the VR mobile phone projection, and the content from the VR mobile phone projection is displayed on the curved surface screen that is obtained through conversion from the rectangular screen. Therefore, the display screen of the mobile phone watched by the user in the VR glasses 200 is a curved surface display screen. In this way, a visual effect of the screen can be enhanced, and video watching experience of a VR user can be further enhanced. Especially when a video is played on a large screen, an excellent visual impact effect is brought.

In an implementation, the electronic device 100 may convert the rectangular screen of the electronic device into the curved surface screen through a conversion method for display.

Refer to FIG. 9. Embodiments of this application provide a VR display control method, to convert a rectangular screen of an electronic device into a curved surface screen for display. The method may include but is not limited to the following steps.

Step S91. Obtain a first angle between two endpoint positions of the curved surface screen and a user.

When all positions on a display screen are the same in distance to the user, more comfortable visual experience may be provided for the user. Therefore, in embodiments of this application, a curvature of the curved surface screen may be a curvature of a circle whose audio-visual distance is a radius.

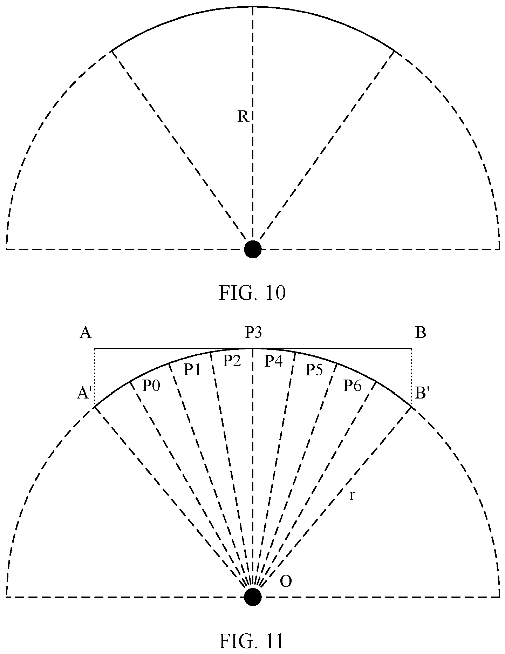

With reference to FIG. 10, it may be learned that a quantity of fixed points may be taken on an arc, and the arc is simplified into splicing of N segments of rectangles, to convert the rectangular screen into the curved surface screen.

In embodiments of this application, four vertex positions of the curved surface screen may be calculated through four vertex positions of the rectangular screen, the two endpoint positions of the curved surface screen are determined based on the four vertex positions of the curved surface screen, and then the first angle between the two endpoint positions of the curved surface screen and the user is determined.

For example, FIG. 11 is a top view of the curved surface screen. It is assumed that the two vertices of the rectangular screen are a vertex A and a vertex B respectively, and a vertex A' and a vertex B' are two endpoints of the curved surface screen. It may be understood that it is assumed that a distance between the vertex A and the vertex B is d1, and a distance between the vertex A' and the vertex B' is d2. In this case, d1=d2.

It is assumed that a position of the user is O, and an audio-visual distance of the user is r. Therefore, based on the distance d2 between the vertex A' and the vertex B' and the audio-visual distance r of the user, an angle ∠A'OB' between the vertex A' and the vertex B' and the position of the user may be calculated.

Step S92. Divide the first angle into N equal parts, and calculate N+1 dot positions.

In an example, as shown in FIG. 10, in an implementation, ∠A'OB' may be divided into eight equal parts. Therefore, positions of A', B', P0, P1, P2, P3, P4, P5, and P6 may be calculated based on a small angle of each screen. That is, specific coordinate positions of A', B', P0, P1, P2, P3, P4, P5, and P6 in the VR glasses may be found.

Step S93. Splice the N+1 dot positions, to convert the rectangular screen into the curved surface screen.

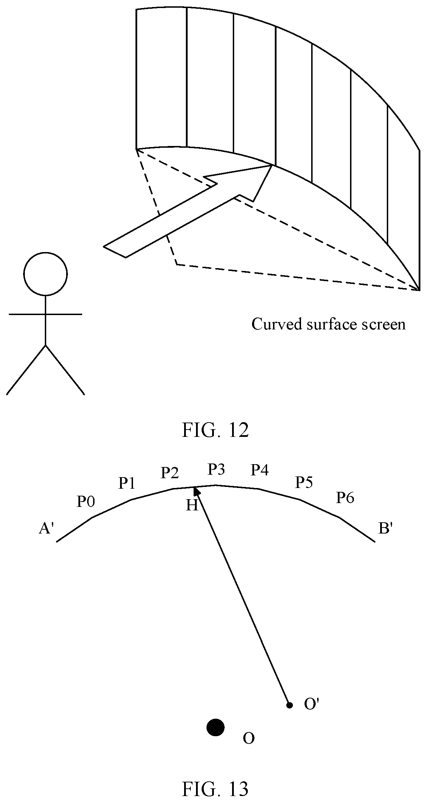

In embodiments of this application, A' and P0, P0 and P1, P1 and P2, P3 and P3, P3 and P4, P4 and P5, and P6 and B' may be spliced. Therefore, after a plurality of rectangles are spliced at the plurality of dot positions, the rectangular screen shown in FIG. 12 may be converted into the curved surface screen.

FIG. 13 is a schematic diagram of operating a curved surface screen by a controller 300 according to an embodiment of this application.

In embodiments of this application, A', B', P0, P1, P2, P3, P4, P5, and P6 shown in FIG. 13 are vertex positions of the curved surface screen, O is a position of a user, O' is a position of the controller 300 in a VR scene, and H is an intersection point of a controller ray and the curved surface screen.

It may be understood that an operation solution of the controller ray may be one of the following cases.

In embodiments of this application, a ray O'H of the controller 300 may sequentially intersect with rectangles A'P0, P0P1, P1P2, P2P3, P3P4, P4P5, P5P6 and P6B', until a point H at which O'H intersects with P2P3 in space is obtained, to obtain a position of H and two-dimensional coordinates on the rectangle P2P3.

A two-dimensional coordinate ratio of the point H on a curved surface A'B' may be finally obtained based on a position of the rectangle P2P3 on the entire curved surface A'B', and the ratio may be used as a touch position at which the controller 300 operates the electronic device 100. In embodiments of this application, a most eye-friendly curvature effect is achieved through a VR virtual scene, so that visual experience of the user can be enhanced, and user experience can be improved.

Embodiments of this application further provide a computer-readable storage medium. The readable storage medium stores computer instructions, and when the instructions are run on a computing device, the computing device may be enabled to perform the VR display control method provided in the foregoing embodiment.

It is clear that, for a person skilled in the art, this application is not limited to details of the foregoing example embodiments, and appropriate modifications and variations made to the foregoing embodiments shall fall within the protection scope of this application provided that the modifications and variations fall within the scope of the appended claims.

## Claims

1. A VR display control method, applied to an electronic device (100) connected to a virtual reality display device (200), wherein the method comprises:
generating a VR desktop, wherein the VR desktop is configured to display on the virtual reality display device (200);
receiving (S82), from the virtual reality display device (200), an operation performed by a user on a first application icon on the VR desktop, wherein the first application icon is associated with a first application installed on the electronic device (100); and
converting, in response to the operation, first content of the first application that is configured to display on a rectangular screen to second content of the first application that is configured to display on a curved surface screen, wherein
the first content is configured to display on the electronic device (100), and the second content is configured to display on the virtual device,
the display method being **characterised in that**
the converting the first content to the second content further comprises:
calculating four vertex positions of the curved surface screen based on four vertex positions of the rectangular screen;
determining (S91) two endpoint positions of the curved surface screen based on the four vertex positions of the curved surface screen; and
determining (S91) a first angle formed by a distance between one endpoint position of the curved surface screen and the user and a distance between the other endpoint position and the user,
wherein the converting the first content to the second content further comprises:
dividing (S92) the first angle into N equal parts, wherein N is an integer greater than or equal to 2; and
calculating N+1 dot positions on the curved surface screen, wherein a dot position represents an endpoint of an equal part among the N equal parts.

2. The VR display control method according to claim 1, further comprising:
establishing (S81) a connection to the virtual reality display device (200); and
entering, by the electronic device (100), a VR mode.

3. The VR display control method according to claim 2, wherein the method further comprises:
entering, by the electronic device (100), a screen-off state after the electronic device (100) enters the VR mode.

4. The VR display control method according to any one of claims 1 to 3, wherein the method further comprises:
establishing a connection to a controller (300) through a wireless network; and
receiving an operation performed by the user on the first application icon through the controller (300).

5. The VR display control method according to any one of claims 1 to 4, wherein the converting the first content to the second content further comprises:
splicing (S93) the N+1 dot positions on the curved surface screen, by splicing adjacent dot positions among the N+1 dot positions.

6. The VR display control method according to any one of claims 1 to 5, further comprising
obtaining two-dimensional coordinates of an intersection point (H) between a controller ray of a controller (300) in a VR scene and an equal part among the N equal parts of the curved surface screen, and, based on the two-dimensional coordinates, obtaining a two-dimensional coordinate ratio of a position of the intersection point (H) based on a position of the intersected equal part on the curved surface screen, wherein
the two-dimensional coordinate ratio is used as a touch position on a touchpad of the controller (300) at which the controller (300) causes an operation at the electronic device (100).

7. An electronic device (100), comprising:
a memory, configured to store a computer program; and
a processor, configured to execute the computer program stored in the memory, wherein when the computer program is executed, the processor is configured to perform the VR display control method according to any one of claims 1 to 6.

8. A computer-readable storage medium, wherein the computer-readable storage medium comprises computer instructions; and when the computer instructions are run on an electronic device (100), the electronic device (100) is configured to perform the VR display control method according to any one of claims 1 to 6.

## Patentansprüche

1. VR-Anzeigesteuerungsverfahren, das auf eine elektronische Vorrichtung (100) angewendet wird, die mit einer Virtual-Reality-Anzeigevorrichtung (200) verbunden ist, wobei das Verfahren Folgendes umfasst:
Erzeugen eines VR-Desktops, wobei der VR-Desktop dafür ausgelegt ist, auf der Virtual-Reality-Anzeigevorrichtung (200) angezeigt zu werden;
Empfangen (S82), von der Virtual-Reality-Anzeigevorrichtung (200), einer von einem Benutzer auf einem ersten Anwendungssymbol auf dem VR-Desktop durchgeführten Operation, wobei das erste Anwendungssymbol einer ersten auf der elektronischen Vorrichtung (100) installierten Anwendung zugeordnet ist; und
Umwandeln, als Reaktion auf die Operation, eines ersten Inhalts der ersten Anwendung, der zur Anzeige auf einem rechteckigen Bildschirm ausgelegt ist, in einen zweiten Inhalt der ersten Anwendung, der zur Anzeige auf einem Bildschirm mit gekrümmter Oberfläche ausgelegt ist, wobei
der erste Inhalt dafür ausgelegt ist, auf der elektronischen Vorrichtung (100) angezeigt zu werden, und der zweite Inhalt dafür ausgelegt ist, auf der virtuellen Vorrichtung angezeigt zu werden,
wobei das Anzeigeverfahren **dadurch gekennzeichnet ist, dass**
das Umwandeln des ersten Inhalts in den zweiten Inhalt ferner Folgendes umfasst:
Berechnen von vier Scheitelpunktpositionen des Bildschirms mit gekrümmter Oberfläche auf der Grundlage von vier Scheitelpunktpositionen des rechteckigen Bildschirms;
Bestimmen (S91) von zwei Endpunktpositionen des Bildschirms mit gekrümmter Oberfläche auf der Grundlage der vier Scheitelpunktpositionen des Bildschirms mit gekrümmter Oberfläche; und
Bestimmen (S91) eines ersten Winkels, der durch einen Abstand zwischen einer Endpunktposition des Bildschirms mit gekrümmter Oberfläche und dem Benutzer und einem Abstand zwischen der anderen Endpunktposition und dem Benutzer gebildet wird, wobei das Umwandeln des ersten Inhalts in den zweiten Inhalt ferner Folgendes umfasst:
Unterteilen (S92) des ersten Winkels in N gleiche Teile, wobei N eine ganze Zahl größer oder gleich 2 ist; und
Berechnen von N+1 Punktpositionen auf dem Bildschirm mit gekrümmter Oberfläche, wobei eine Punktposition einen Endpunkt eines gleichen Teils unter den N gleichen Teilen darstellt.

2. VR-Anzeigesteuerungsverfahren nach Anspruch 1, ferner umfassend:
Herstellen (S81) einer Verbindung zur Virtual-Reality-Anzeigevorrichtung (200); und
Eintreten, durch die elektronische Vorrichtung (100), in einen VR-Modus.

3. VR-Anzeigesteuerungsverfahren nach Anspruch 2, wobei das Verfahren ferner Folgendes umfasst:
Eintreten, durch die elektronische Vorrichtung (100), in einen Zustand mit abgeschaltetem Bildschirm, nachdem die elektronische Vorrichtung (100) in den VR-Modus eingetreten ist.

4. VR-Anzeigesteuerungsverfahren nach einem der Ansprüche 1 bis 3, wobei das Verfahren ferner Folgendes umfasst:
Herstellen einer Verbindung zu einer Steuerung (300) über ein Drahtlosnetz; und
Empfangen einer vom Benutzer auf dem ersten Anwendungssymbol durchgeführten Operation durch die Steuerung (300).

5. VR-Anzeigesteuerungsverfahren nach einem der Ansprüche 1 bis 4, wobei das Umwandeln des ersten Inhalts in den zweiten Inhalt ferner Folgendes umfasst:
Spleißen (S93) der N+1 Punktpositionen auf dem Bildschirm mit gekrümmter Oberfläche, indem benachbarte Punktpositionen unter den N+1 Punktpositionen gespleißt werden.

6. VR-Anzeigesteuerungsverfahren nach einem der Ansprüche 1 bis 5, ferner umfassend:
Erhalten von zweidimensionalen Koordinaten eines Schnittpunkts (H) zwischen einem Steuerungsstrahl einer Steuerung (300) in einer VR-Szene und einem gleichen Teil unter den N gleichen Teilen des Bildschirms mit gekrümmter Oberfläche, und, auf der Grundlage der zweidimensionalen Koordinaten, Erhalten eines zweidimensionalen Koordinatenverhältnisses einer Position des Schnittpunkts (H) auf der Grundlage einer Position des geschnittenen gleichen Teils auf dem Bildschirm mit gekrümmter Oberfläche, wobei
das zweidimensionale Koordinatenverhältnis als Berührungsposition auf einem Touchpad der Steuerung (300) verwendet wird, bei der die Steuerung (300) eine Operation an der elektronischen Vorrichtung (100) auslöst.

7. Elektronische Vorrichtung (100), umfassend:
einen Speicher, der dafür ausgelegt ist, ein Computerprogramm zu speichern, und
einen Prozessor, der dafür ausgelegt ist, das im Speicher gespeicherte Computerprogramm auszuführen, wobei der Prozessor bei Ausführung des Computerprogramms dafür ausgelegt ist, das VR-Anzeigesteuerungsverfahren nach einem der Ansprüche 1 bis 6 durchzuführen.

8. Computerlesbares Speichermedium, wobei das computerlesbare Speichermedium Computeranweisungen umfasst; und wenn die Computeranweisungen auf einer elektronischen Vorrichtung (100) ausgeführt werden, die elektronische Vorrichtung (100) dafür ausgelegt ist, das VR-Anzeigesteuerungsverfahren nach einem der Ansprüche 1 bis 6 durchzuführen.

## Revendications

1. Procédé de commande d'affichage VR, appliqué à un dispositif électronique (100) connecté à un dispositif d'affichage de réalité virtuelle (200), le procédé comprenant :
la génération d'un bureau VR, le bureau VR étant configuré pour s'afficher sur le dispositif d'affichage de réalité virtuelle (200) ;
la réception (S82), en provenance du dispositif d'affichage de réalité virtuelle (200), d'une opération réalisée par un utilisateur sur une première icône d'application sur le bureau VR, la première icône d'application étant associée à une première application installée sur le dispositif électronique (100) ; et
la conversion, en réponse à l'opération, d'un premier contenu de la première application qui est configuré pour s'afficher sur un écran rectangulaire en un deuxième contenu de la première application qui est configuré pour s'afficher sur un écran de surface incurvé,
le premier contenu étant configuré pour s'afficher sur le dispositif électronique (100), et le deuxième contenu étant configuré pour s'afficher sur le dispositif virtuel,
le procédé d'affichage étant **caractérisé en ce que**
la conversion du premier contenu en le deuxième contenu comprend en outre :
le calcul de quatre positions de sommet de l'écran de surface incurvé sur la base de quatre positions de sommet de l'écran rectangulaire ;
la détermination (S91) de deux positions de point d'extrémité de l'écran de surface incurvé sur la base des quatre positions de sommet de l'écran de surface incurvé ; et
la détermination (S91) d'un premier angle formé par une distance entre une position de point d'extrémité de l'écran de surface incurvé et l'utilisateur et une distance entre l'autre position de point d'extrémité et l'utilisateur,
la conversion du premier contenu en le deuxième contenu comprenant en outre :
la division (S92) du premier angle en N parties égales, N étant un nombre entier supérieur ou égal à 2 ; et
le calcul de N +1 positions de spot sur l'écran de surface incurvé, une position de spot représentant un point d'extrémité d'une partie égale parmi les N parties égales.

2. Procédé de commande d'affichage VR selon la revendication 1, comprenant en outre :
l'établissement (S81) d'une connexion au dispositif d'affichage de réalité virtuelle (200) ; et
l'entrée, par le dispositif électronique (100), dans un mode VR.

3. Procédé de commande d'affichage VR selon la revendication 2, le procédé comprenant en outre :
l'entrée, par le dispositif électronique (100), dans un état d'écran éteint après que le dispositif électronique (100) entre dans le mode VR.

4. Procédé de commande d'affichage VR selon l'une quelconque des revendications 1 à 3, le procédé comprenant en outre :
l'établissement d'une connexion à un dispositif de commande (300) par le biais d'un réseau sans fil ; et
la réception d'une opération réalisée par l'utilisateur sur la première icône d'application par le biais du dispositif de commande (300).

5. Procédé de commande d'affichage VR selon l'une quelconque des revendications 1 à 4, dans lequel la conversion du premier contenu en le deuxième contenu comprend en outre :
l'épissure (S93) des N + 1 positions de spot sur l'écran de surface incurvé, par épissage de positions de spot adjacentes parmi les N +1 positions de spot.

6. Procédé de commande d'affichage VR selon l'une quelconque des revendications 1 à 5, comprenant en outre l'obtention de coordonnées bidimensionnelles d'un point d'intersection (H) entre un rayon de dispositif de commande d'un dispositif de commande (300) dans une scène VR et une partie égale parmi les N parties égales de l'écran de surface incurvé, et, sur la base des coordonnées bidimensionnelles, l'obtention d'un rapport de coordonnées bidimensionnel d'une position du point d'intersection (H) sur la base d'une position de la partie égale coupée sur l'écran de surface incurvé,
le rapport de coordonnées bidimensionnel étant utilisé en tant que position tactile sur un pavé tactile du dispositif de commande (300) au niveau duquel le dispositif de commande (300) provoque une opération au niveau du dispositif électronique (100).

7. Dispositif électronique (100), comprenant :
une mémoire, configurée pour stocker un programme informatique ; et
un processeur, configuré pour exécuter le programme informatique stocké dans la mémoire, dans lequel lorsque le programme informatique est exécuté, le processeur est configuré pour réaliser le procédé de commande d'affichage VR selon l'une quelconque des revendications 1 à 6.

8. Support de stockage lisible par ordinateur, le support de stockage lisible par ordinateur comprenant des instructions informatiques ; et lorsque les instructions informatiques sont exécutées sur un dispositif électronique (100), le dispositif électronique (100) est configuré pour réaliser le procédé de commande d'affichage VR selon l'une quelconque des revendications 1 à 6.
